# EUROPEAN PATENT SPECIFICATION

(11) **EP 1 390 625 B1**
(45) Date of publication and mention of the grant of the patent: **30.08.2006**
(21) Application number: 02728276.3
(22) Date of filing: 30.04.2002
(51) Int. Cl.: F16B 1/00

(54) **COUPLING ARRANGEMENT**
VERBINDUNGSANORDNUNG
ENSEMBLE D'ACCOUPLEMENT

(30) Priority: 08.05.2001 SE 0101582
(43) Date of publication of application: 25.02.2004
(73) Proprietor: Scania CV AB (publ), 151 87 Södertälje (SE)
(72) Inventor: HJORTSBERG, Ake, S-151 39 Södertälje (SE)
(74) Representative: Sjögren, Stina
(86) International application number: PCT/SE2002/000536
(87) International publication number: WO 2002/090783

(56) References cited:
- US-A- 4 597 354
- US-A- 4 701 064

## Description

The present invention relates to a coupling arrangement according to the preamble to patent claim 1 (see, for example, US-A-4 597 354).

### State of the art

A coupling between two machine elements is often subject to severe stresses. It is therefore very important that the coupling be strong and durable. It is also desirable that it be of simple design with few components capable of failing and thereby weakening the coupling.

Connecting two machine elements together in a machine-tool is an example of an application where such a strong and durable coupling needs to be used. SE9903123-9 refers to a machine-tool in which a centering part and a clamping part are joined together by a compressed air operated clamp coupling not described in detail. As the actual coupling is operated directly by compressed air, it may be deprived of its compressive force if the air supply is disconnected, resulting, in the worst case, in the coupling being released.

Previously known couplings in machine-tools for machining of workpieces are often of relatively large radial extent in order to be able to exert compressive force as required for joining machine elements together. Such couplings usually open in such a way that in the open position they are of significantly greater radial extent than in the closed position. This means that the actual coupling requires a relatively large radial space in the machine-tool and that the centreholes of workpieces have to be dimensioned according to the extent of the coupling.

### Object of the invention

The object of the invention is to provide a strong and durable coupling of inexpensive and relatively simple design which will, where applicable, be suitable for dry machining. This is achieved with a coupling arrangement which exhibits the features indicated in the characterising part of patent claim 1.

If this solution is used in a machine-tool, the machine can be made simpler and less expensive than previous known machine-tools, since the coupling arrangement consists entirely of mechanical components. The time required for setting up a machine-tool with this coupling will also be shorter than for a machine with a pneumatic coupling, since the coupling need not be removed.

The fact that the coupling is so designed as to comprise first and second coupling parts whereby the shape of the first coupling part results in it fitting slidingly to the second part so that the inside surface of the first part cooperates with the outside surface of the second part during movement between open and locked positions means that the coupling occupies little space during movement between open and locked positions

A further advantage of the invention is that the lower part of the coupling arrangement can be of relatively limited extent in the radial direction. This does not diminish its ability to exert a powerful locking force, but it does make it possible to machine workpieces with smaller centreholes than previously.

In an advantageous embodiment, the coupling arrangement incorporates a locking part movable slidingly between two positions, in the second of which the locking part locks the coupling by shape. Locking by shape means that no external forces need be applied to hold the coupling in the locked position and thereby lock two machine elements firmly together. The result is a strong coupling with great force absorption capacity.

Designing the coupling arrangement so that it incorporates a fastening device which fits slidingly by shape to the outside surface of the first coupling part, thereby acting as a guiding means for the movement of the first part, results in a reliable coupling which is always guided to correct open and locked positions.

Designing the second coupling part in the form of a partly ball-shaped element and the first coupling part in the form of at least two jaw-like parts of a substantially spherical shell whereby the jaws can slide on the ball renders the coupling movable, thereby facilitating many applications. Examples include a towing coupling between vehicles and the machining of workpieces in a machine-tool whereby the workpiece being machined need not be exactly parallel.

The design is further simplified by providing the ball-shaped element with a substantially planar upper surface adapted to cooperating with the locking part, and a substantially planar lower surface adapted to cooperating with a machine element which needs to be locked firmly to another machine element.

Chamfering the abutting surfaces of the jaw parts above the central horizontal plane of the spherical shell makes it possible for the jaw parts to move between open and locked positions, thereby providing the coupling with opening and locking functions appropriate to the purpose.

### List of drawings

- Figure 1: depicts schematically a longitudinal section of a preferred embodiment of a coupling arrangement according to the invention in an open position.
- Figure 2: depicts schematically a longitudinal section of a preferred embodiment of a coupling arrangement according to the invention in a closed position.
- Figure 3: depicts a side view of the first coupling part which forms part of the coupling arrangement.
- Figure 4: depicts a jaw part of the coupling part depicted in Figure 3.
- Figure 5: depicts a view from above of the first coupling part.

### Description of an embodiment

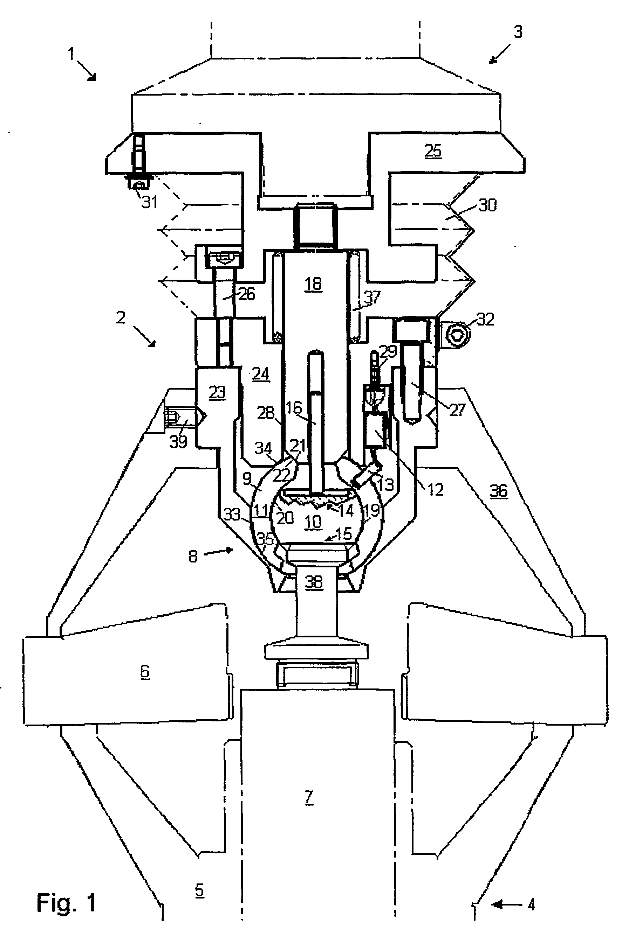

Figure 1 depicts a machine-tool (1) equipped with a coupling arrangement (2) according to the invention. The coupling arrangement (2) is arranged to connect together two machine elements (3,4) which form part of the machine-tool, in order in the coupled position to transmit primarily tensile and compressive forces. In this embodiment, the machine-tool (1) takes the form of a gear milling machine incorporating an upper machine part (3) and a lower machine part (4). The coupling arrangement (2) is arranged on the upper machine part (3), which is arranged for movement in an undepicted slide. The lower machine part (4) incorporates a fixture part (5) which can support a workpiece (6), e.g. a gearwheel. The fixture part (5), which is arranged on an undepicted machine table, has a guide in which a centering mandrel (7) is arranged.

In the embodiment depicted, the upper machine part (3) incorporates a supporting part (25) which supports the coupling arrangement (2). The supporting part (25) is fastened in a conventional manner (not depicted) to the upper machine part, e.g. by means of screws. It is also possible to conceive of the coupling arrangement (2) being fastened directly to the upper machine part (3) without a supporting part. The coupling arrangement (2) comprises a coupling (8), a coupling bracket (23,24) and a locking part (18). The locking part (18) causes the coupling to move between an open first position and a locking second position. The locking bracket (23,24) supports the coupling (8) and guides the movement of the latter's constituent parts between said positions. In the second position, the coupling (8) is locked by shape by means of the locking part (18) so that the machine parts (3,4) are firmly connected together by the coupling (8).

The coupling bracket (23,24) is releasably fastened to the supporting part (25) by means of spacing screws (26) (only one of which is depicted in the diagram) or some equivalent fastening elements. A. protective bellows (30) is attached by conventional fastening elements such as screws (31,32) to the supporting part (25) and the coupling bracket (23,24). The protective bellows (30) forms an envelope enclosing the region between the supporting part (25) and the coupling bracket (23,24) and prevents dirt and dust from entering this region. In said region, at least a first motion-transmitting element (37) is arranged between the supporting part (25) and the coupling bracket (23,24). This first motion-transmitting element (37) advantageously consists of a circular compression spring which urges the supporting part (25) and the coupling bracket (23,24) away from one another. Said element (37) may also take the form of, for example, a pneumatic or hydraulic piston.

The coupling bracket (23,24) has running through its centre a recess (28) which extends axially along the vertical plane of the coupling bracket. The locking part (18) is arranged for movement in said recess (28). In this embodiment, the locking part (18) is itself firmly screwed into the supporting part (25) but may also, for example, be fastened by a screw or rivet. The locking part (18) may also be fastened directly to the upper machine part (3). The coupling bracket (23,24) is arranged to support the coupling (8) whereby surfaces (21,33,34) of the locking part (18) and the coupling bracket (23,24) cooperate with surfaces (22,35) of the coupling so that the coupling can be guided between an open first position and a locked second position. The shape of the guiding surfaces (33,34) of the coupling bracket fits the external shape of the coupling so that the coupling can slide on these surfaces.

One or more motion-transmitting elements (12) are arranged in the coupling bracket (23,24). Their purpose is to bring the coupling (8) from the locked position to the open position. According to the embodiment depicted, the coupling bracket (23,24) incorporates an outer guide element (23) and an inner guide element (24) which are connected by screws (27) to form a unit. The diagram depicts only one screw (27) but there are advantageously a number of screws evenly distributed along a substantially circular path round the coupling bracket at a suitable distance from the centre of the coupling bracket. The coupling bracket (23,24) is divided into two to make it possible to assemble the coupling. The inner guide element (24) has at least one recess in which said motion-transmitting element (12) is arranged. A clamping means (36) is arranged on the outside surface of the outer guide element (23) by means of a fastening element (39) in order to clamp the workpiece (6) firmly in the machine-tool.

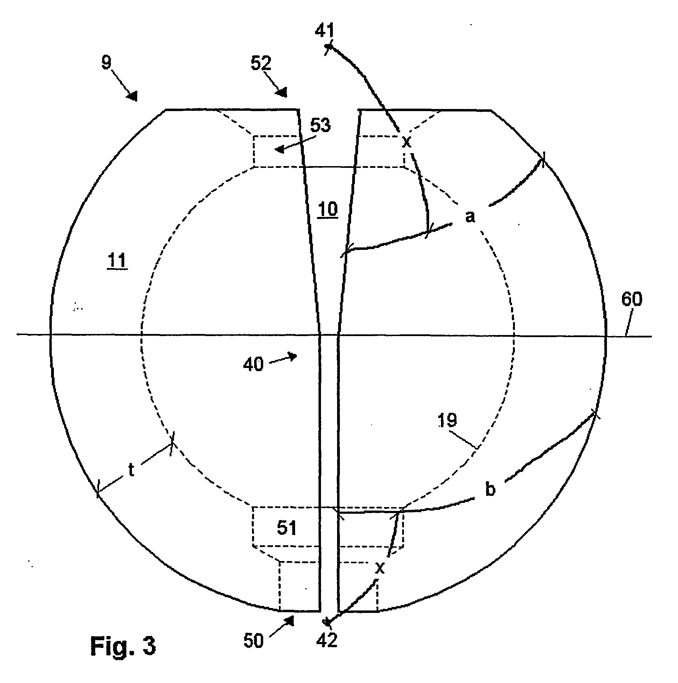

The coupling (8) comprises a first coupling part (9) and a second coupling part (10). The first coupling part (9) takes the form of a substantially spherical shell divided in its axial direction into a number of jaw-like shell parts (11) (preferably three) which are of substantially the same size. The shell parts (11) are conceived of as being arcuate. Each shell part (11) is joined to the aforesaid motion-transmitting element (12). In the example according to Figure 1, the motion-transmitting element consists of tension springs (12), one per shell part, which are fastened by screws (13) to the respective shell parts (11) and by means of threaded connections (29) to the inner guide element (24). Other motion-transmitting elements such as compressed air hydraulics are also conceivable, but tension springs provide a simple mechanical solution. The first coupling part (9) appears in more detail in Figures 3-5.

The second coupling part (10) is arranged within the first coupling part (9), the shell parts of which substantially enclose said second coupling part (10). The two coupling parts (9,10) have delineating surfaces which fit each other's shape so that they can move slidingly relative to one another. The second coupling part (10) is arranged to cooperate with the lower machine part (4) during locking of the coupling (8). Said coupling part (10) takes the form of a substantially spherical ball with truncated upper and lower portions (14 and 15 respectively). The diagram shows the spherical ball partly sectioned for the sake of clarity. It is also possible to conceive of the coupling part (10) being in the form of an element with arcuate surface. The lower portion (15) of the ball has a substantially planar surface arranged to cooperate with the centering mandrel (7), preferably a spigot (3 8) formed on the upper part of the mandrel, during locking of the coupling (8). The ball has an outside surface (20), the shape of which makes it fit slidingly to the inside surface (19) of the shell parts so that the shell parts (11) can slide along the ball between a first position and a second position. A guide element (16), in the example depicted a plate provided with a cylindrical stem, is arranged at the upper portion (14) of the ball. The guide element (16) may be an integral part of the second coupling part (10) but may also be a separate component fastened to said coupling part (10) by means of a suitable fastening connection. The guide element (16) is arranged in a recess (17) in the locking part (18) which is itself attached permanently or releasably to the supporting part (3). There is a small clearance between the locking part (18) and the guide element (16) so that the guide element can move radially to some extent in the recess (17). The guide element (16) causes the rotary movement of the ball to be limited and results in the ball (10) being unable to rotate about its horizontal centerline but being allowed to move to a limited extent by said clearance.

The locking part (18) takes the form in the example depicted of a cylindrical piston which is screwed firmly into the supporting part (25) and which can move in the vertical direction between a first position and a second position. A part-surface (21) of the locking part, in the example depicted a chamfer on the underside of said piston, is arranged to bear upon a part-surface (22) of the first coupling part (9) so that said coupling part (9) also moves between a first position and a second position when the locking part (18) moves between its positions. There is a small clearance between the locking part (18) and the coupling bracket (23,24) and also between the two coupling parts (9,10). The clearance is of the order of a tenth of a millimetre. This means that the coupling can oscillate to some extent, thereby enabling the clamping part (36) to position itself according to the plane of the workpiece when the lower machine part on which the workpiece rests is stationary. A workpiece which is being firmly clamped for machining need therefore not be clamped exactly parallel with the horizontal plane of the machine-tool in order to achieve optimum machining results. The coupling thus allows a certain deviation in alignment, i.e. in the positioning between the respective horizontal planes of the upper machine part (3) and the lower machine part (4).

Figure 3 represents a side view of the first coupling part (9) with its internal structure and depicts in broken lines the enclosed second coupling part (10). Each shell part (11) is chamfered on its mutually opposite abutting surfaces (40) on a region corresponding substantially to half of the extent of the abutting surfaces in the vertical direction, starting from a horizontal symmetry plane (60) of the theoretical sphere which the coupling part (9) forms part of. In the embodiment depicted, segments shaped like wedge slices of a circular cake are chamfered off in a linear manner from the region about the horizontal symmetry plane of the sphere to one end of the sphere (in the diagram the upper end). Thus the respective shell part's peripheral arc length (a) at an arbitrary distance (x) from one theoretical pole (41) of the sphere is shorter than the circumference (b) at the same distance (x) from the other theoretical pole (42) of the sphere, provided that said distance (x) is not greater than the distance between a theoretical pole (41,42) and the horizontal symmetry plane of the sphere (in other words, x ≤ the radius of the sphere). In the example depicted, the chamfering is on the upper half of the shell parts, but the shell parts may of course also be chamfered on their lower half instead. Said chamfering makes it possible for the shell parts (11) to rotate along the second coupling part (10) between a first position and a second position. The magnitude of the chamfers is dimensioned according to the aperture required for unobstructed passage of the machine part which is to be enclosed, in this embodiment the spigot (38) of the centering mandrel. In this embodiment, chamfering to about 10° from the vertical abutting surface of the shell part is proposed. The lower halves of the shell parts together constitute a hemisphere with a truncated bottom. This means that the first coupling part (9) can hold a machine part (4) firmly locked to the second coupling element (10) in its locked second position. The respective shell parts (11) have a material thickness (t) dimensioned according to the type of use of the coupling and made of, for example, toughened steel, bronze, plastic or iron. The coupling in the embodiment depicted is made of toughened steel and the material thickness is between 5 and 10 mm, preferably 8 mm. In one end (50) of the first coupling part there are in the shell parts recesses (51) which together correspond substantially to the shape of the machine part (38) which is held firmly by the coupling. In the other end (52) there are correspondingly recesses (53) which together are arranged to accommodate the locking part (18).

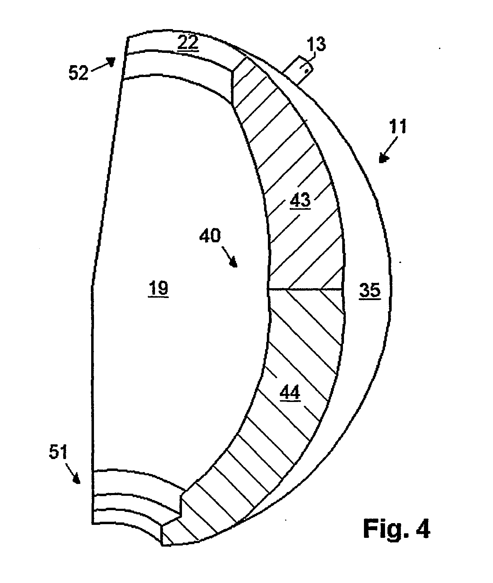

Fig. 4 depicts a shell part (11) which forms part of the first coupling part. It shows more clearly the division of the abutting surface into a chamfered portion (43) and an unchamfered portion (44). The unchamfered portion (44) corresponds to the cut surface of a sphere sawn vertically in two. The diagram also shows more clearly not only the inside surface (19) of the first coupling part, which is designed to slide on the outside surface (20) of the second coupling part, but also its outside surface (35) which is designed to slide along the guiding surfaces (33,34) of the coupling bracket. The diagram also shows the part-surface (22) of the first coupling part, which in this example takes the form of an obliquely positioned recess in the inside wall of the shell part and is designed to cooperate by shape with the part-surface (21) of the locking part. The shell part (11) depicted in the diagram is provided with a fastening element (13) for the previously mentioned motion-transmitting element (12).

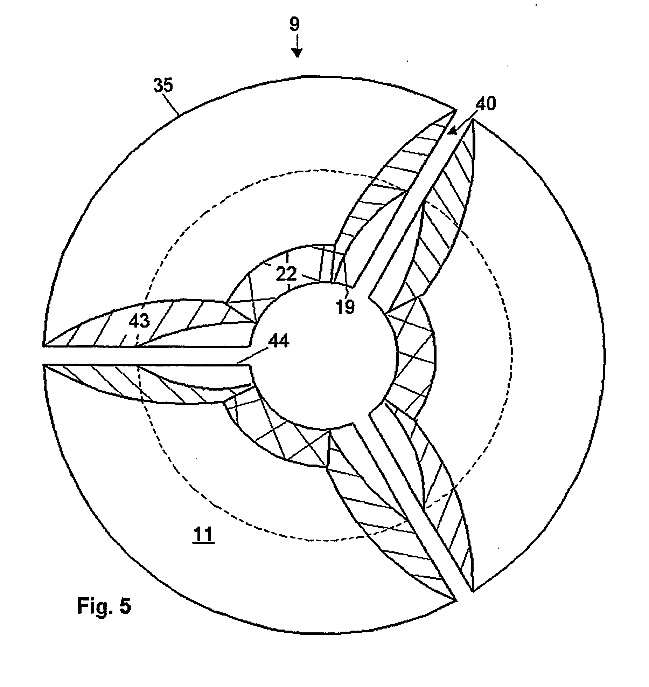

Fig. 5 depicts the first coupling part (9) as seen from above, conceived of as enclosing the undepicted second coupling part. The coupling part (9) in the diagram comprises three shell parts, resulting in a strong coupling which works well. A minimum of two shell parts are required to enable the coupling to be opened, but a larger number of shell parts is also conceivable. The diagram shows the abutting surfaces (40) of the shell parts arranged centrally to one another, and the lower portion of these abutting surfaces (44) so designed that the distance between the shell parts in this lower region is substantially constant. This distance should be as small as possible, a typical distance being about 1 millimetre. The distance between the upper portions of the abutting surfaces (43) increases in a linear manner from the lower portion (44) to the upper end of the coupling part. The diagram shows the shell part (9) in its locked second position. When the shell part (9) has been turned to its open first position, which is determined by the design of the chamfer (21) of the locking part, there is a relatively small distance between the upper portions of the abutting surfaces (43). At the same time, the aperture between the lower portions of the abutting surfaces (44) is similar in shape to a wedge slice of a circular cake.

Manufacturing the first coupling part described above starts with machining a blank to form a spherical ball. This is followed by machining one end off, in the embodiment depicted the upper end (52). The inside of the ball is then milled out to its desired internal shape, which in this example means creating not only space for the second coupling part (10) but also recesses (51,53) for the centering mandrel's spigot and the locking part. Finally, the ball is divided into the desired number of shell parts and the upper abutting surface of each shell part is chamfered.

The procedure for setting up a machine-tool, including an electrohydraulic control system for controlling its operations, to carry out a machining operation is as follows:

The workpiece (6) is placed on the centering mandrel (7) so as to rest on the fixture part (5). The machine's upper part (3) and the coupling arrangement (2) arranged on it are then lowered axially downwards until the lower portion (15) of the second coupling part comes into contact with the spigot (38) of the centering mandrel. This results in cessation of the axial movement of the second coupling part (10), while at the same time the machine's upper part (3) continues to move downwards, which is possible because of the intermediate space between its supporting part (25) and the coupling bracket (23,24). The second coupling part (10) coming into contact with the spigot (38) of the centering mandrel also brings to a halt the axial movement of the coupling bracket (23,24).

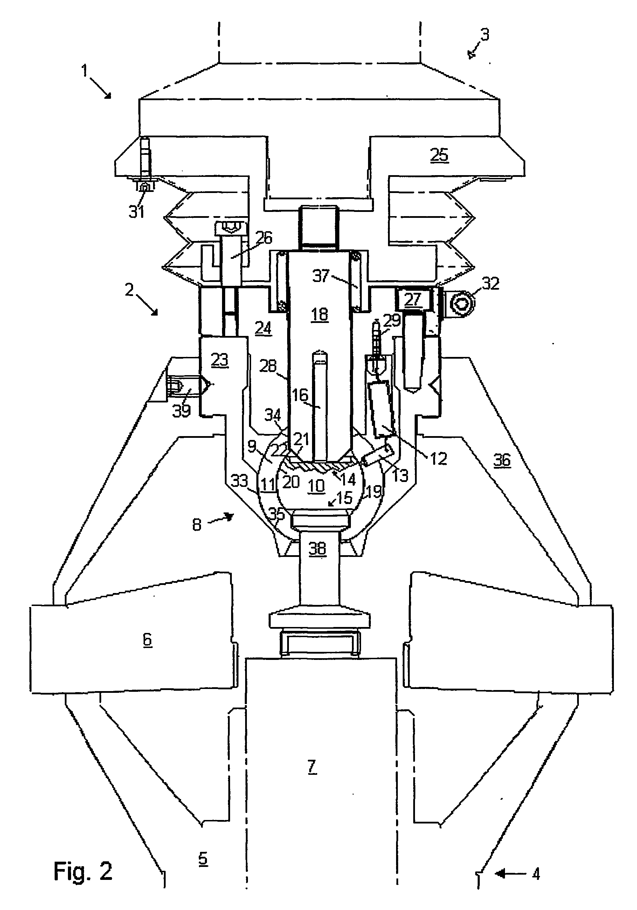

As the locking part (18) is directly or indirectly fastened to the upper machine part (3), it too moves axially through the recess in the coupling bracket (23,24). As mentioned above, the coupling bracket (23,24) is stationary during this movement, which means that the compression springs (37) arranged between the supporting part (25) and the coupling bracket (23,24) are compressed. The locking part (18) bears in turn via its part-surfaces (21) upon the part-surfaces (22) of the first coupling part so that the shell parts (11) rotate against the action of the tension springs (12) to cause the inside surfaces (19) of the shell parts to slide on the outside surface (20) of the second coupling part from their open first position (depicted in Fig. 1) to their closed second position (depicted in Fig. 2). The guiding surfaces (33,34) of the coupling bracket guide the movement of the shell parts by sliding contact with the outside surfaces (35) of the shell parts. As the locking part (18) thus pushes away the shell parts (11), it slides down into the coupling (8) within the shell parts (11) until it rests against the guide element (16) on the upper portion (14) of the second coupling part. This causes the shell parts to close about the fastening spigot (38) of the centering mandrel. The locking part (18) being positioned inside the coupling (8) results in reliable locking which prevents the shell parts from opening. As the locking part (18) keeps the coupling locked, the coupling bracket (23,24) need not exert any compressive force on the coupling (8). This means that the coupling bracket (23,24) may be relatively small in radial extent. This and the fact that said bracket (23,24) does not widen radially when the coupling (8) opens means that workpiece centreholes can be smaller than previously.

When the locking part (18) has locked the coupling (8), and the clamping means (36) of the machine-tool is situated at a predetermined distance from the workpiece (6), a sensor signals to the machine-tool to halt the movement of the upper machine part. This is followed by the workpiece (6) being centered in a known manner. See for example SE 500 166. When centering has been completed, a signal from the centering mandrel (7) goes to the control system, whereupon the mandrel (7) is drawn axially downwards, e.g. by means of an undepicted hydraulic cylinder, so that the clamping means (36) clamps on the workpiece (6). Thereafter the workpiece is machined.

After completion of machining, the mandrel (7) is moved axially upwards to its initial position, the downward force on the centering mandrel (7) is removed and a signal goes to the machine's upper part (3) to revert to its initial position. At the same time, a signal goes to the centering mandrel (7), which assumes its uncentered position. When the upper part (3) of the machine moves axially upwards, the coupling bracket (23,24) and the supporting part (25) are urged apart by the compression springs (37) but the coupling (8) is kept closed. When the upper machine part (3) moves upwards, the locking part (18) also moves upwards, since it is attached to the upper machine part (3). The upward movement is limited by spacing screws (26) and comes to a halt when the heads of the spacing screws abut against a surface of the supporting part (25). The locking part (18) is thus drawn out of its locking engagement by shape with the coupling (8), and the tension springs (12) automatically return the shell parts (11) to their open first position. The coupling (8) is therefore open, enabling the spigot (38) of the centering mandrel to be withdrawn from the coupling arrangement and the machined workpiece to be removed.

The embodiment depicted refers only to using the coupling arrangement in a machine-tool, but the coupling arrangement according to the invention might also be used in applications which require strong and simple joining together of two elements. Examples include coupling a vehicle and a trailer and applications in tensile broaching machines or in pneumatic tools.

## Claims

1. A coupling arrangement (2) for connecting together two elements (3,4), which coupling arrangement incorporates a coupling (8) arranged on one of the elements (3) and comprising a first coupling part (9) movable between a first position and a second position, in which second position the coupling is arranged to cooperate with the other element and thereby locks the first element (3) firmly to the second element (4), the coupling (8) comprising a second coupling part (10), which fits the first coupling part (9) by shape, **characterised in that** the first coupling part (9) substantially encloses the second coupling part (10) in the first open position as well as in the second closed position, wherein the first coupling part (9) is slidingly movable between said positions along an arcuate surface.

2. A coupling arrangement according to patent claim 1, **characterised in that** the first coupling part has an inside surface (19) which cooperates slidingly with the outside surface (20) of the second coupling part during movement between said first and second positions.

3. A coupling arrangement according to either of patent claims 1-2, **characterised in that** said arrangement (2) incorporates a fastening device (23,24) which supports the coupling (8) and fits by shape slidingly the first coupling part (9), and the fastening device (23,24) acts as a guiding means for the movement of the first coupling part between said two positions.

4. A coupling arrangement according to any one of patent claims 1-3, **characterised in that** said arrangement (2) incorporates a locking part (18) which is movable by sliding between a first position and a second position, which locking part (18) is directly or indirectly connected to the first element (3) and is in surface contact (21,22) with the coupling, so that when the locking part (18) moves between its two positions it causes the first coupling part (9) to move between its first and second positions.

5. A coupling arrangement according to patent claim 4, **characterised in that** in its second position the locking part (18) locks by shape the coupling (8).

6. A coupling arrangement according to any one of patent claims 2-5, **characterised in that** the second coupling part (10) comprises a partly ball-shaped element, preferably a spherical ball with a substantially spherical outside surface (20) and truncated upper (14) and lower (15) portions.

7. A coupling arrangement according to any one of patent claims 2-6, **characterised in that** the first coupling part (9) takes the form of part of a substantially spherical shell divided axially into at least two, preferably three, jaw-like shell parts (11), and each shell part (11) has an internal surface (19) designed to slide on the outside surface (20) of the second coupling part.

8. A coupling arrangement according to either of patent claims 6-7, **characterised in that** the ball-shaped element (10) incorporates not only a substantially planar upper surface (14) where a guide element (16) is arranged to cooperate with the locking part (18) so that the ball-shaped element (10) cannot rotate about its horizontal symmetry axis, but also a substantially planar lower surface (15) arranged to cooperate with the second element (4) when being joined to the first element (3).

9. A coupling arrangement according to either of patent claims 7-8, **characterised in that** the shell parts (11) have abutting surfaces (40) chamfered on a region corresponding to substantially half of the extent of the abutting surfaces in the vertical direction, starting from a horizontal symmetry plane of a theoretical sphere partly constituted by the first coupling part (9), and the outer circumference (a) at one end of the respective shells is smaller than the outer circumference (b) at the other end to make it possible for the shell parts to move between the first position and the second position, in which second position the shell parts (11) hold the second element (4) locked firmly to the ball element (10).

10. A coupling arrangement according to any one of patent claims 1-9, **characterised in that** the coupling arrangement (2) is arranged in a machine-tool and that the elements (3,4) consist of the machine-tool's upper and lower parts (3 and 4 respectively), and the lower part (4) incorporates a centering mandrel (7) which has a spigot (38) arranged to be locked firmly by the coupling (8).

## Patentansprüche

1. Verbindungsanordnung (2) zum Verbinden zweier Elemente (3, 4), wobei die Verbindungsanordnung eine erste Kupplung (8) aufweist, die an einem der Elemente (3) angeordnet ist und ein erstes Kupplungsteil (9) umfasst, das zwischen einer ersten und einer zweiten Position bewegbar ist, wobei die Kupplung in der zweiten Position dazu angeordnet ist, mit dem anderen Element zusammenzuwirken, und dabei das erste Element (3) fest mit dem zweiten Element (4) verriegelt, wobei die Kupplung ein zweites Kupplungsteil (10) umfasst, das zu dem ersten Kupplungsteil (9) hinsichtlich seiner Form passt,
**dadurch gekennzeichnet, dass** das erste Kupplungsteil (9) das zweite Kupplungsteil (10) in der ersten offenen Stellung sowie in der zweiten geschlossenen Stellung im Wesentlichen umgibt, wobei das erste Kupplungsteil (9) entlang einer bogenförmigen Fläche zwischen den Positionen verschiebbar ist.

2. Verbindungsanordnung nach Patentanspruch 1,
**dadurch gekennzeichnet, dass** das erste Kupplungsteil eine Innenfläche (19) umfasst, die gleitend mit der Außenfläche (20) des zweiten Kupplungsteils während einer Bewegung zwischen der ersten und der zweiten Position zusammenwirkt.

3. Verbindungsanordnung nach einem der Patentansprüche 1 oder 2,
**dadurch gekennzeichnet, dass** die Anordnung (2) eine Haltevorrichtung (23, 24) umfasst, die die Kupplung (8) hält und formschlüssig mit dem ersten Kupplungsteil (9) gleitend zusammen passt, und dass die Haltevorrichtung (23, 24) als Führungsmittel für die Bewegung des ersten Kupplungsteils zwischen den beiden Positionen wirkt.

4. Verbindungsanordnung nach einem der Patentansprüche 1 bis 3,
**dadurch gekennzeichnet, dass** die Anordnung (2) ein Verriegelungsteil (18) umfasst, das zwischen einer ersten und einer zweiten Position verschiebbar ist, wobei das Verriegelungsteil (18) direkt oder indirekt mit dem ersten Element (3) verbunden ist und in Oberflächenkontakt (21, 22) mit der Kupplung steht, so dass das Verriegelungsteil (18) dann, wenn es sich zwischen seinen beiden Positionen bewegt, bewirkt, dass sich das erste Kupplungsteil (9) zwischen seiner ersten und zweiten Stellung bewegt.

5. Verbindungsanordnung nach Patentanspruch 4,
**dadurch gekennzeichnet, dass** das Verriegelungsteil (18) in seiner zweiten Stellung die Kupplung (8) formschlüssig verriegelt.

6. Verbindungsanordnung nach einem der Patentansprüche 2 bis 5,
**dadurch gekennzeichnet, dass** das zweite Kupplungsteil (10) ein zum Teil kugelförmiges Element, vorzugsweise eine sphärische Kugel, mit einer im Wesentlichen sphärischen Außenoberfläche (20) und abgeflachten oberen (11) und unteren (15) Abschnitten umfasst.

7. Verbindungsanordnung nach einem der Patentansprüche 2 bis 6,
**dadurch gekennzeichnet, dass** das erste Kupplungsteil (9) die Form eines Teils einer im Wesentlichen sphärischen Schale aufweist, die axial in wenigstens zwei, vorzugsweise drei, klauenartige Schalenteile (11) unterteilt ist, und dass jedes Schalenteil (11) eine Innenoberfläche (19) aufweist, die dazu ausgebildet ist, auf einer Außenoberfläche (20) des zweiten Kupplungsteils zu gleiten.

8. Verbindungsanordnung nach einem der Patentansprüche 6 bis 7,
**dadurch gekennzeichnet, dass** das kugelförmige Element (10) nicht nur eine im Wesentlichen planare obere Oberfläche (14) umfasst, wo ein Führungselement (16) derart angeordnet ist, dass es mit dem Verriegelungsteil (18) zusammenwirkt, so dass das kugelförmige Element (10) nicht um seine horizontale Symmetrieachse rotieren kann, sondern auch eine im Wesentlichen planare untere Oberfläche (15) umfasst, die derart angeordnet ist, dass sie mit dem zweiten Element (4) zusammenwirkt, wenn dieses mit dem ersten Element (3) verbunden ist.

9. Verbindungsanordnung nach einem der Patentansprüche 7 oder 8,
**dadurch gekennzeichnet, dass** die Schalenteile (11) Anlageflächen (40) aufweisen, die an einem Bereich abgeschrägt sind, der im Wesentlichen der halben Erstreckung der Anlageflächen in vertikaler Richtung entspricht, ausgehend von einer horizontalen Symmetrieebene einer theoretischen Sphärenform, die teilweise von dem ersten Kupplungsteil (9) gebildet ist, und dass der Außenumfang (a) an einem Ende der jeweiligen Schalen kleiner ist als der Außenumfang (b) am anderen Ende, um zu ermöglichen, dass sich die Schalenteile zwischen der ersten und der zweiten Stellung bewegen, wobei die Schalenteile (11) in der zweiten Stellung das zweite Element (4) zu dem Kugelelement (10) fest verriegelt halten.

10. Verbindungsanordnung nach einem der Patentansprüche 1 bis 9,
**dadurch gekennzeichnet, dass** die Verbindungsanordnung (2) in einem Maschinenwerkzeug angeordnet ist und dass die Elemente (3, 4) aus dem oberen und unteren Teil (3 und 4 jeweils) des Maschinenwerkzeugs bestehen und dass der untere Teil (4) eine Zentrierspindel (7) umfasst, die einen Zapfen (38) aufweist, der derart ausgebildet ist, dass er fest von der Kupplung (8) verriegelt wird.

## Revendications

1. Élément d'accouplement (2) permettant de relier ensemble deux éléments (3, 4), ledit élément d'accouplement comportant un accouplement (8) disposé sur un des éléments (3) et comprenant une première partie d'accouplement (9) mobile entre une première position et une seconde position, seconde position dans laquelle l'accouplement est placé de façon à coopérer avec l'autre élément et de ce fait verrouille le premier élément (3) de façon fixe au second élément (4), l'accouplement (8) comprenant une seconde partie d'accouplement (10) dont la forme s'adapte à la première partie d'accouplement (9), **caractérisé en ce que** la première partie d'accouplement (9) entoure essentiellement la seconde partie d'accouplement (10) dans la première position ouverte ainsi que dans la seconde position fermée, la première partie d'accouplement (9) pouvant être déplacée par coulissement entre lesdites positions le long d'une surface arquée.

2. Élément d'accouplement selon la revendication 1, **caractérisé en ce que** la première partie d'accouplement (2) a une surface interne (19) qui coopère par coulissement avec la surface externe (20) de la seconde partie d'accouplement pendant le déplacement entre lesdites première et seconde positions.

3. Élément d'accouplement selon l'une des revendications 1 à 2, **caractérisé en ce que** ledit élément (2) comprend un dispositif de fixation (23, 24) qui supporte l'accouplement (8) et dont la forme est adaptée par coulissement au premier élément d'accouplement (9), et **en ce que** le dispositif de fixation (23, 24) agit comme un moyen de guidage pour le déplacement de la première partie d'accouplement entre lesdites deux positions.

4. Élément d'accouplement selon l'une des revendications 1 à 3, **caractérisé en ce que** ledit élément (2) comprend une partie de verrouillage (18) qui est mobile par coulissement entre une première position et une seconde position, ladite partie de verrouillage (18) étant directement ou indirectement connectée au premier élément (3) et se trouvant en contact de surface (21, 22) avec l'accouplement, si bien que lorsque la partie de verrouillage (18) se déplace entre ses deux positions, elle fait en sorte que la première partie d'accouplement (9) se déplace entre ses première et seconde positions.

5. Élément d'accouplement selon la revendication 4, **caractérisé en ce que** dans sa seconde position, la partie de verrouillage (18) verrouille l'accouplement (8) par sa forme.

6. Élément d'accouplement selon l'une quelconque des revendications 2 à 5, **caractérisé en ce que** la seconde partie d'accouplement (10) comprend un élément partiellement en forme de boule, de préférence une boule sphérique ayant une surface externe essentiellement sphérique (20) et des portions supérieure (14) et inférieure (15) tronquées.

7. Élément d'accouplement selon l'une quelconque des revendications 2 à 6, **caractérisé en ce que** la première partie d'accouplement (9) prend la forme d'une partie d'une coque essentiellement sphérique divisée par son axe en au moins deux, de préférence trois, parties de coque de type mâchoire (11), et chaque partie de coque (11) a une surface interne (19) conçue pour coulisser sur la surface externe (20) de la seconde partie d'accouplement.

8. Élément d'accouplement selon l'une des revendications 6 à 7, **caractérisé en ce que** l'élément en forme de boule (10) comprend non seulement une surface supérieure essentiellement plane (14) dans laquelle un élément de guidage (16) est disposé pour coopérer avec la partie de verrouillage (18) de façon telle que l'élément en forme de boule (10) ne peut pas tourner autour de son axe de symétrie horizontale, mais aussi une surface inférieure essentiellement plane (15) disposée pour coopérer avec le second élément (4) lorsqu'il est joint au premier élément (3).

9. Élément d'accouplement selon l'une des revendications 7 à 8, **caractérisé en ce que** les parties de coque (11) présentent des surfaces de butée (40) chanfreinées sur une région qui correspond essentiellement à la moitié de l'étendue des surfaces de butée dans la direction verticale, en partant d'un plan de symétrie horizontale d'une sphère théorique partiellement constituée par la première partie d'accouplement (9), et **en ce que** la circonférence externe (a) à une extrémité des coques respectives est inférieure à la circonférence externe (b) au niveau de l'autre extrémité, pour permettre aux parties de coque de se déplacer entre la première position et la seconde position, seconde position dans laquelle les parties de coque (11) retiennent le second élément (4) verrouillé de façon fixe à l'élément en boule (10).

10. Élément d'accouplement selon l'une quelconque des revendications 1 à 9, **caractérisé en ce que** l'élément d'accouplement (2) est disposé dans une machine-outil et **en ce que** les éléments (3, 4) se composent des parties supérieure (3) et inférieure (4) de la machine-outil, et **en ce que** la partie inférieure (4) comprend un mandrin de centrage (7) qui possède un ergot (38) disposé pour être fermement verrouillé par l'accouplement (8).
